# EUROPÄISCHE PATENTANMELDUNG

(11) **EP 0 905 200 A1**
(43) Veröffentlichungstag der Anmeldung: **31.03.1999**
(21) Anmeldenummer: 98118035.9
(22) Anmeldetag: 23.09.1998
(51) Int. Cl.: C09B 62/51, D06P 1/384

(54) **Wasserlösliche Azoverbindungen, Verfahren zu ihrer Herstellung und ihre Verwendung als Farbstoffe**

(30) Priorität: 30.09.1997 DE 19743099
(71) Anmelder: DyStar Textilfarben GmbH & Co. Deutschland KG, 60318 Frankfurt am Main (DE)
(72) Erfinder: Dannheim, Jörg, Dr., 60489 Frankfurt (DE); Rebsamen, Karl, Dr., 25709 Marne (DE); Russ, Werner Hubert, Dr., 65439 Flörsheim (DE)

(57) **Zusammenfassung**

Wasserlösliche Azoverbindungen mit einer Anilin-Diazokomponente, die durch eine faserreaktive Gruppe aus der Vinylsulfonreihe substituiert ist und durch Halogen, Sulfo, Carboxy, niederes Alkyl und niederes Alkoxy substituiert sein kann, und einer 1-Amino-3,6- oder -4,6-disulfo-8-naphthol-Kupplungskomponente, deren Aminogruppe durch einen in 2- und 4-Stellung durch Sulfophenylamino substituierten 1,3,5-Triazin-6-yl-Rest substituiert ist, wobei die Aminogruppen der Sulfophenylamino-Reste durch niederes Alkyl und die beiden Phenylreste zusätzlich durch Carboxy, Sulfo, Halogen, niederes Alkyl und niederes Alkoxy substituiert sein können.
Die Azoverbindungen haben sehr gute faserreaktive Farbstoffeigenschaften und färben hydroxy- und/oder carbonamidgruppenhaltiges Material, wie insbesondere Fasermaterial, wie Cellulosefasermaterial, Wolle und synthetisches Polyamid, in farbstarken, echten blaustichig roten bis bordofarbenen Tönen.

## Beschreibung

Die Erfindung liegt auf dem technischen Gebiet der faserreaktiven Farbstoffe.

Aus den U.S.-Patentschriften Nrs. 4 775 746 und 5 334 709 sind bereits als Farbstoffe dienende Azoverbindungen bekannt, die einen faserreaktiven Rest der Vinylsulfon-Reihe in der Diazokomponente und als Kupplungskomponente ein Disulfo-aminonaphthol besitzen, dessen Aminogruppe mit einem Triazinrest verbunden ist, der durch eine oder zwei Phenylaminogruppen substituiert ist. Diese bekannten Verbindungen besitzen jedoch noch gewisse Mängel, wie beispielsweise eine ungenügende Ätzbarkeit, eine ungenügende Auswaschbarkeit und Wasserechtheit, eine nicht zufriedenstellende Löslichkeit, vor allem beim Einsatz in Druckverfahren und in Klotz-Kaltverweil-Färbeverfahren, und eine unzureichende Brillanz ihrer Färbungen. Darüberhinaus sind sie pH-empfindlich und erleiden Änderungen in der Farbnuance gegenüber Kupferionen, die in technisch verwendbarem Wasser enthalten sein können oder beim Ätzen ihrer in Kombination mit Kupferkomplexfarbstoffen hergestellten Färbungen aus den kupferhaltigen Farbstoffen frei werden. Ebenso ergeben sich bei den bekannten Farbstoffen im bereits genannten Klotz-Kaltverweil-Färbeverfahren wegen zu hoher Substantivität Mängel, indem die Endengleichheit der erhaltenen Färbungen nicht gewahrt wird.

Weiterhin sollten im Klotz-Kaltverweil-Verfahren auch dann Färbungen mit gleicher Farbstärke erhalten werden, wenn anstelle der sonst üblichen alkalisch wirkenden Mittel, wie Natriumhydroxid und Natriumcarbonat, Wasserglas eingesetzt wird. Auch wird für solche Klotzflotten eine hohe Flottenstabilität gefordert.

Mit der vorliegenden Erfindung wurden nun in Auswahl aus den genannten Schriften als faserreaktive Farbstoffe einsetzbare Azoverbindungen ganz bestimmter Konstitution gefunden, mit denen die erwähnten Mängel weitgehend behoben sind.

Die vorliegende Erfindung betrifft Azoverbindungen der allgemeinen Formel (1) 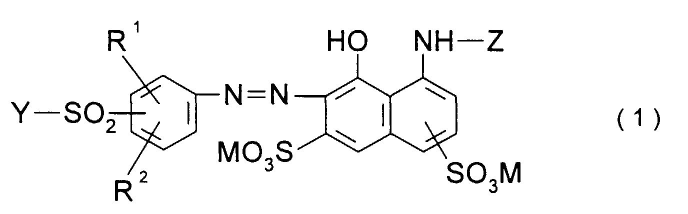 in welcher bedeuten:
- R¹: ist Wasserstoff, Halogen, wie Chlor und Brom, Sulfo, Carboxy, Alkyl von 1 bis 4 C-Atomen, wie Methyl und Ethyl, oder Alkoxy von 1 bis 4 C-Atomen, wie Methoxy und Ethoxy, bevorzugt Wasserstoff, Methyl oder Methoxy, insbesondere bevorzugt Wasserstoff;
- R²: ist Wasserstoff, Halogen, wie Chlor und Brom, Alkyl von 1 bis 4 C-Atomen, wie Methyl und Ethyl, oder Alkoxy von 1 bis 4 C-Atomen, wie Methoxy und Ethoxy, bevorzugt Wasserstoff, Methyl oder Methoxy, insbesondere bevorzugt Wasserstoff;
- Y: ist Vinyl, β-Sulfatoethyl, β-Phosphatoethyl, β-Thiosulfatoethyl, β-Acetoxyethyl, β-Chlorethyl, β-Bromethyl oder β-Fluorethyl, bevorzugt Vinyl, β-Sulfatoethyl und β-Thiosulfatoethyl, insbesondere Vinyl und β-Sulfatoethyl;
- M: ist Wasserstoff oder ein Alkalimetall, wie Natrium, Kalium oder Lithium, oder ein anderes in Farbstoffen übliches salzbildendes Metall;
- die: eine Gruppe -SO₃M steht an den Naphthalinrest in para- oder meta-Stellung, bevorzugt in meta-Stellung, zur Gruppe -NH-Z gebunden;
- Z: ist eine Gruppe der allgemeinen Formel (2) 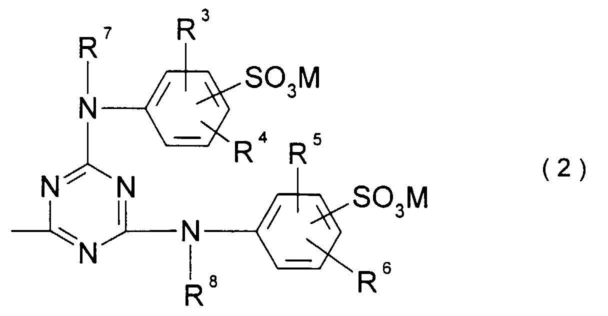
worin bedeuten:
- M: hat die obengenannte Bedeutung;
- R³: ist Wasserstoff, Carboxy, Sulfo, Halogen, wie Chlor und Brom, Alkyl von 1 bis 4 C-Atomen, wie Methyl und Ethyl, oder Alkoxy von 1 bis 4 C-Atomen, wie Methoxy und Ethoxy, bevorzugt Wasserstoff, Chlor, Methyl, Methoxy, Carboxy oder Sulfo, insbesondere bevorzugt Wasserstoff oder Sulfo;
- R⁴: ist Wasserstoff, Sulfo, Alkyl von 1 bis 4 C-Atomen, wie Methyl und Ethyl, oder Alkoxy von 1 bis 4 C-Atomen, wie Methoxy und Ethoxy, bevorzugt Wasserstoff oder Sulfo;
- R⁵: ist Wasserstoff, Carboxy, Sulfo, Alkyl von 1 bis 4 C-Atomen, wie Methyl und Ethyl, oder Alkoxy von 1 bis 4 C-Atomen, wie Methoxy und Ethoxy, bevorzugt Wasserstoff, Methyl, Methoxy, Carboxy oder Sulfo, insbesondere bevorzugt Wasserstoff oder Sulfo;
- R⁶: ist Wasserstoff, Sulfo, Alkyl von 1 bis 4 C-Atomen, wie Methyl und Ethyl, oder Alkoxy von 1 bis 4 C-Atomen, wie Methoxy und Ethoxy, bevorzugt Wasserstoff oder Sulfo;
- R⁷: Wasserstoff oder Alkyl von 1 bis 4 C-Atomen, wie Ethyl und insbesondere Methyl, bevorzugt Wasserstoff;
- R⁸: Wasserstoff oder Alkyl von 1 bis 4 C-Atomen, wie Ethyl und insbesondere Methyl, bevorzugt Wasserstoff.

In den Azoverbindungen der allgemeinen Formel (1) ist der Rest der Diazokomponente entsprechend der allgemeinen Formel (3) 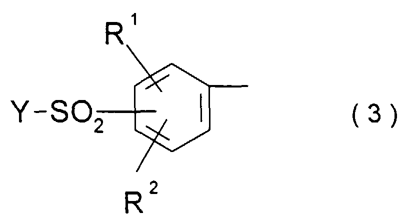 bevorzugt 3-(β-Sulfatoethylsulfonyl)-phenyl, 3-(Vinylsulfonyl)-phenyl, 3-(β-Thiosulfatoethylsulfonyl)-phenyl, 2-Sulfo-4-(β-sulfatoethylsulfonyl)-phenyl, 2-Carboxy-4-(β-sulfatoethylsulfonyl)-phenyl, 2-Methoxy-5-(β-sulfatoethylsulfonyl)-phenyl und insbesondere 4-(β-Sulfatoethylsulfonyl)-phenyl und 4-(Vinylsulfonyl)-phenyl.

In den Azoverbindungen der allgemeinen Formel (1) sind weiterhin die Reste entsprechend den allgemeinen Formel (4a) und (4b) 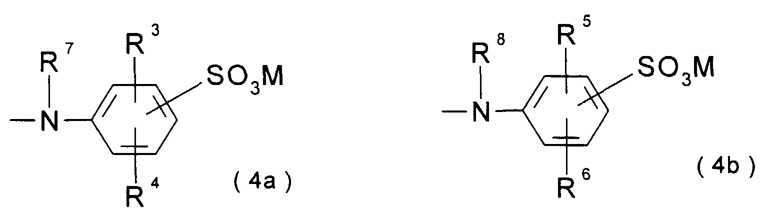 bevorzugt 2-Sulfo-phenylamino, 2-Carboxy-5-sulfo-phenylamino, 3-Sulfo-phenylamino, 2-Carboxy-4-sulfo-phenylamino, 4-Sulfo-phenylamino, 4-Chlor-2-sulfo-phenylamino, 2,5-Disulfo-phenylamino, 2-Sulfo-4-methyl-phenylamino und 2-Sulfo-4-methoxy-phenylamino, hiervon bevorzugt 2-Sulfo-phenylamino, 3-Sulfo-phenylamino und 4-Sulfo-phenylamino, insbesondere 3-Sulfo-phenylamino.

In den vorstehenden und in den nachfolgenden allgemeinen Formeln können die einzelnen Formelglieder, sowohl verschiedener als gleicher Bezeichnung innerhalb einer allgemeinen Formel, im Rahmen ihrer Bedeutung zueinander gleiche oder zueinander verschiedene Bedeutungen haben.

Die Gruppen "Sulfo", "Thiosulfato", "Carboxy", "Phosphato" und "Sulfato" schließen sowohl deren Säureform als auch deren Salzform ein. Demgemäß bedeuten Sulfogruppen Gruppen entsprechend der allgemeinen Formel -SO₃M , Thiosulfatogruppen Gruppen entsprechend der allgemeinen Formel -S-SO₃M , Carboxygruppen Gruppen entsprechend der allgemeinen Formel -COOM, Phosphatogruppen Gruppen entsprechend der allgemeinen Formel -OPO₃M₂ und Sulfatogruppen Gruppen entsprechend der allgemeinen Formel -OSO₃M , in welchen M die obengenannte Bedeutung besitzt.

Die vorliegende Erfindung betrifft weiterhin Verfahren zur Herstellung der Azoverbindungen der allgemeinen Formel (1), indem man eine Azoverbindung der allgemeinen Formel (5) 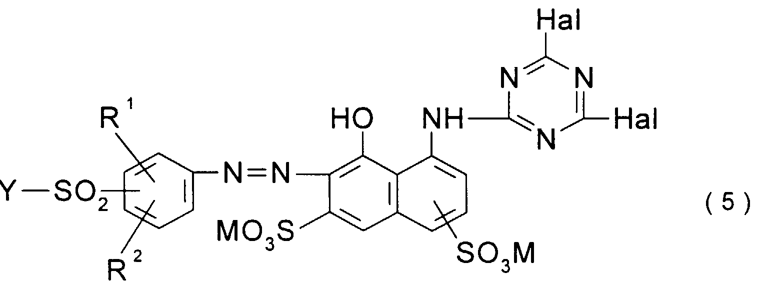 in welcher R¹, R², Y und M die obengenannten Bedeutungen haben und Hal für Chlor, Brom oder Fluor, bevorzugt Chlor, steht, mit einer Aminoverbindung der allgemeinen Formel (6a) und einer Aminoverbindung der allgemeinen Formel (6b) 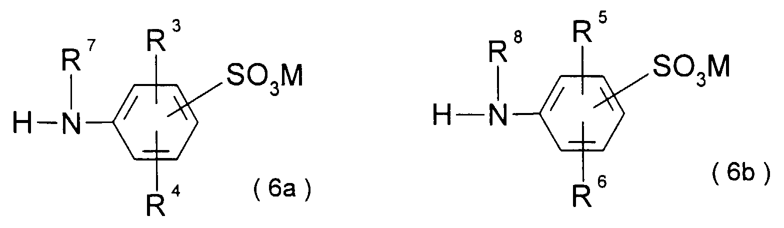 in welchen R³, R⁴, R⁵, R⁶, R⁷, R⁸ und M die obengenannten Bedeutungen haben, umsetzt, oder indem man eine Verbindung der allgemeinen Formel (7) 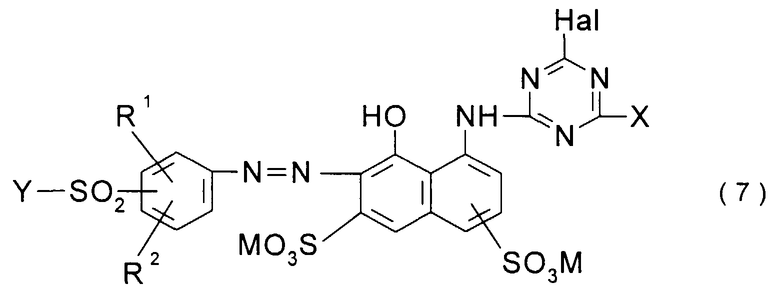 in welcher R¹, R², Y, Hal und M die obengenannten Bedeutungen haben und X ein Rest der obengenannten und definierten allgemeinen Formel (4a) oder (4b) ist, mit einer Aminoverbindung der obengenannten und definierten allgemeinen Formel (6b) bzw. (6a) umsetzt, oder indem man eine Verbindung der allgemeinen Formel (8) 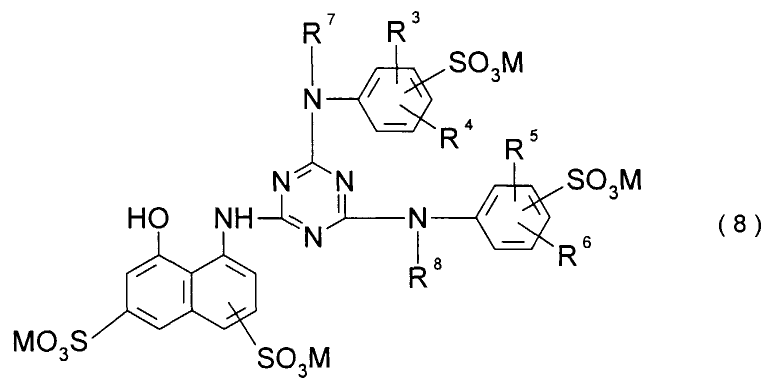 in welcher R³, R⁴, R⁵, R⁶, R⁷, R⁸ und M die obengenannten Bedeutungen haben, mit einem Diazoniumsalz einer Anilinverbindung der allgemeinen Formel (9) 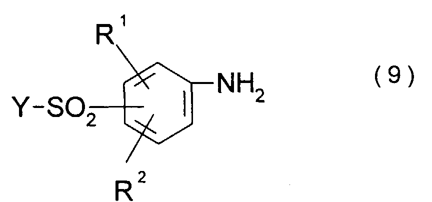 in welcher R¹, R² und Y die obengenannten Bedeutungen haben, kuppelt. Bevorzugt hiervon ist insbesondere die Verfahrensweise der Umsetzung einer Verbindung der allgemeinen Formel (7) mit den Aminen der allgemeinen Formeln (6a) und (6b).

Die Umsetzungen erfolgen in der Regel im wäßrigen Medium in Suspension oder Lösung. Führt man die Umsetzung mit einer halogentriazin-haltigen Ausgangsverbindung durch, so kann die Umsetzung auch in einem wäßrigorganischen Medium durchgeführt werden, wobei der organische Lösemittelanteil beispielsweise Aceton, Dimethylformamid, Dimethylsulfoxyd oder N-Methylpyrrolidon sein kann. Vorteilhaft wird der bei der Umsetzung der halogentriazinhaltigen Verbindung frei werdende Halogenwasserstoff laufend durch Zugabe von säurebindenden Mitteln, wie Alkali- und Erdalkalihydroxide, -carbonate oder -bicarbonate, bevorzugt in Form einer wäßrigen Lösung, neutralisiert.

Die erfindungsgemäße Umsetzung der Ausgangs-Azoverbindung der allgemeinen Formel (5) mit zunächst einer Aminoverbindung der allgemeinen Formel (6a) oder (6b) erfolgt in der Regel bei einem pH-Wert zwischen 3 und 8, bevorzugt zwischen 4 und 6, und einer Temperatur zwischen 5 und 40°C, bevorzugt zwischen 10 und 30°C; die anschließende Umsetzung mit der zweiten Aminoverbindung der allgemeinen Formel (6b) oder (6a) erfolgt sodann bei einem pH-Wert zwischen 1 und 5, bevorzugt zwischen 2 und 4, und bei einer Temperatur zwischen 40 und 100°C, bevorzugt zwischen 50 und 90°C.

Die Umsetzung einer Azoverbindung der allgemeinen Formel (7) mit einer Aminoverbindung der allgemeinen Formel (6a) oder (6b) wird bei einem pH-Wert zwischen 1 und 5, bevorzugt zwischen 2 und 4, und einer Temperatur zwischen 40 und 100°C, bevorzugt zwischen 50 und 90°C, durchgeführt.

Die erfindungsgemäße Kupplungsreaktion mit einem Diazoniumsalz eines Amins der allgemeinen Formel (9) mit einer Verbindung der allgemeinen Formel (8) erfolgt in der Regel bei einem pH-Wert zwischen 1 und 5, bevorzugt zwischen 2 und 4, und bei einer Temperatur zwischen 0 und 20°C, bevorzugt zwischen 5 und 15°C.

Die zur Synthese der erfindungsgemäßen Azoverbindungen der allgemeinen Formel (1) dienenden Ausgangsverbindungen, insbesondere deren Vorprodukte, wie die Anilinverbindungen der allgemeinen Formel (9), die Disulfoaminonaphthol-Kupplungskomponenten, die Trihalogen-triazine und die Aminoverbindungen der allgemeinen Formel (6a) und (6b), sind allgemein bekannt und in der Literatur zahlreich beschrieben. Die Ausgangsverbindungen der allgemeinen Formel (8) lassen sich in analoger Weise zu den obigen Umsetzungen der halogentriazin-haltigen Verbindungen herstellen, indem man ein auf bekanntem Wege hergestelltes 3,6- oder 4,6-Disulfo-1-(dihalogen-triazinyl)-amino-8-hydroxy-naphthalin zunächst mit einem Amin der allgemeinen Formel (6a) oder (6b) bei einem pH-Wert zwischen 2 und 7, bevorzugt zwischen 3 und 6, und einer Temperatur zwischen 0 und 30°C, bevorzugt zwischen 5 und 20°C, umsetzt und die so erhaltene Monohalogen-triazin-Verbindung anschließend mit einem Amin der allgemeinen Formel (6b) bzw. (6a) bei einem pH-Wert zwischen 1 und 5, bevorzugt zwischen 2 und 4, und einer Temperatur zwischen 40 und 100°C, bevorzugt zwischen 50 und 90°C, umsetzt.

Die Abscheidung der erfindungsgemäß hergestellten Azoverbindungen der allgemeinen Formel (1) - im nachfolgenden Verbindungen (1) genannt - aus den Syntheseansätzen erfolgt nach allgemein bekannten Methoden entweder durch Ausfällen aus dem Reaktionsmedium mittels Elektrolytsalzen, wie beispielsweise Natriumchlorid oder Kaliumchlorid, oder durch Eindampfen oder Sprühtrocknung der Reaktionslösung, wobei dieser Reaktionslösung eine bevorzugt in schwach saurem pH-Bereich stabilisierende Puffersubstanz, wie beispielsweise Mischungen aus Natriumdihydrogen- und Dinatriumhydrogenphosphat, zugeführt werden kann.

Die Verbindungen (1) haben faserreaktive Eigenschaften und besitzen sehr gute Farbstoffeigenschaften. Sie können deshalb zum Färben von hydroxy- und/oder carbonamidgruppenhaltigem Material, insbesondere Fasermaterial, verwendet werden. Ebenso können auch die bei der Synthese der erfindungsgemäßen Verbindungen anfallenden Lösungen, gegebenenfalls nach Zusatz einer bevorzugt den pH-Bereich von 3 bis 7 stabilisierende Puffersubstanz und gegebenenfalls nach Konzentrierung, direkt als Flüssigpräparation der färberischen Verwendung zugeführt werden.

Hydroxygruppenhaltige Materialien sind natürliche oder synthetische hydroxygruppenhaltige Materialien, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Polyamid-6,6, Polyamid-6, Polyamid-11 und Polyamid-4.

Natürlich sind die Verbindungen (1) zum Färben von Gemischen solcher Fasermaterialien oder im Gemisch mit anderen Fasermaterialien, wie beispielsweise Polyesterfasern, geeignet.

Die Verbindungen (1) lassen sich auf verschiedene Weise auf das Fasermaterial applizieren und auf der Faser fixieren, insbesondere in Form von wäßrigen Farbstofflösungen und -druckpasten. Sie eignen sich sowohl für das Ausziehverfahren als auch zum Färben nach dem Foulard-Färbeverfahren, wonach die Ware mit wäßrigen, gegebenenfalls salzhaltigen Farbstofflösungen imprägniert und der Farbstoff nach einer Alkalibehandlung oder in Gegenwart von Alkali, gegebenenfalls unter Wärmeeinwirkung, fixiert wird. Diese Färbe- und Druckverfahren sind zahlreich in der allgemeinen Fachliteratur wie auch in der Patentliteratur, wie beispielsweise in den anfangs genannten Druckschriften, beschrieben.

Gegenstand der vorliegenden Erfindung ist deshalb auch die Verwendung der Verbindungen (1) zum Färben dieser Materialien bzw. Verfahren zum Färben solcher Materialien in an und für sich üblicher Verfahrensweise, bei welchen eine Verbindung (1) als Farbmittel eingesetzt wird, indem man die Verbindung (1) im wäßrigen Medium auf das Material appliziert und diese mittels Wärme oder mittels einer alkalisch wirkenden Verbindung oder mittels beidem auf dem Material fixiert (unter "Färben" wird auch die Anwendung von Verfahren zum Bedrucken verstanden). Bevorzugt kommen die Materialien in Form von Fasermaterialien zur Anwendung, insbesondere als Textilfasermaterialien, wie in Form von Geweben oder als Garne, wie in Form von Strängen und Wickelkörpern.

Die Verbindungen (1) zeichnen sich durch hohe Reaktivität, gutes Fixiervermögen und ein sehr gutes Aufbauvermögen aus. Sie können daher nach den Ausziehfärbeverfahren bei niedrigen Färbetemperaturen eingesetzt werden und erfordern bei Pad-Steam-Verfahren nur kurze Dämpfzeiten. Die Fixiergrade sind hoch, wobei die Differenz zwischen Ausziehgrad und Fixiergrad bemerkenswert klein ist. Die Verbindungen (1) eignen sich auch besonders zum Druck, vor allem auf Baumwolle, ebenso aber auch zum Bedrucken von stickstoffhaltigen Fasern, wie beispielsweise von Wolle oder Seide oder von Mischgeweben, die Wolle oder Seide enthalten. Weiterhin sind sie sehr gut für den Einsatz in den Ätzdruck- und Reservedruckverfahren geeignet, ebenso in den Klotz-Kaltverweil-Färbeverfahren, bei welchen man ein Gewebe mit einer alkalischen Farbstofflösung überklotzt oder ein Gewebe im Foulard zunächst mit einer neutralen Farbstofflösung imprägniert und sodann mit einer alkalischen Lösung, wie bevorzugt einer Wasserglas-Lösung, überklotzt und das so imprägnierte Gewebe ablegt oder auf einer Docke aufwickelt und zur Fixierng der Farbstoffe bei Raumtemperatur für mehrere Stunden liegen läßt. Die Farbstoffe (1) zeigen hierbei eine hohe Klotzflottenstabilität und liefern eine Färbung mit hoher Endengleichheit, selbst bei Anwendung in Kombination mit anderen Farbstoffen.

Des weiteren zeichnen sich die erfindungsgemäßen Verbindungen (1) darin aus, daß nach dem Färbeprozeß auf dem Fasermaterial nicht fixierte Anteile der Verbindungen (1) sich sehr leicht auswaschen lassen, ohne daß Weißwäsche, die sich mit in dem Waschprozeß befindet, durch die sich ablösende Verbindung (1) angeschmutzt wird. Hieraus ergeben sich Vorteile für den Färbeprozeß: der Seifverlust ist sehr gering und Waschzyklen und damit Kosten werden eingespart.

Die mit den Verbindungen (1) hergestellten Färbungen und Drucke besitzen, insbesondere auf Cellulosefasermaterialien, eine hohe Farbstärke und eine hohe Bindungsstabilität zwischen Faser und Verbindung (1) sowohl in saurem als auch in alkalischem Bereich, weiterhin eine gute Lichtechtheit und sehr gute Naßechtheitseigenschaften, wie Wasch-, Wasser-, Seewasser-, Ueberfärbe- und Schweißechtheiten, sowie eine gute Plissierechtheit, Bügelechtheit und Reibechtheit.

Die Verbindungen (1) können als Präparation in fester oder in flüssiger (gelöster) Form vorliegen. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumborat, Natriumhydrogencarbonat, Natriumdihydrogenphosphat und Dinatriumhydrogenphosphat, geringe Mengen an Sikkativen oder die Löslichkeit verbessernde Mittel, wie die bekannten Naphthalinsulfonsäure-Formaldehyd-Kondensationsprodukte, oder, falls sie in flüssiger, wäßriger Lösung (einschließlich des Gehaltes von Verdickungsmitteln, wie sie bei Druckpasten üblich sind) vorliegen, können sie die genannten Substanzen (außer den Sikkativen) ebenfalls gelöst enthalten und ebenso Substanzen, die die Haltbarkeit dieser Präparationen gewährleisten, wie beispielsweise schimmelverhütende Mittel.

Im allgemeinen liegen die Verbindungen (1) als elektrolytsalzhaltige Pulver oder Granulate mit einem Gesamtfarbstoffgehalt von 20 bis 70 Gew.-%, bezogen auf das Farbstoffpulver bzw. die Präparation, vor. Diese Präparationen können zudem die erwähnten Puffersubstanzen in einer Gesamtmenge von bis zu 5 Gew.-%, bezogen auf die Präparation, enthalten. Sofern die Verbindungen (1) in wäßriger Lösung vorliegen, beträgt der Gesamtfarbstoffgehalt in diesen wäßrigen Lösungen bis zu etwa 50 Gew.-%, wie beispielsweise zwischen 5 und 40 Gew.-%., wobei der Elektrolytsalzgehalt in diesen wäßrigen Lösungen bevorzugt unterhalb 10 Gew.-%, bezogen auf die wäßrige Lösung, beträgt; die wäßrigen Lösungen (Flüssigpräparationen) können die erwähnten Puffersubstanzen in der Regel in einer Menge von bis zu 5 Gew.-%, bevorzugt bis zu 2 Gew.-%, enthalten. Sowohl die wäßrigen als auch festen Präparationen können ein übliches Hilfsmittel enthalten.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säure angegeben; im allgemeinen werden sie in Form ihrer Alkalimetallsalze, wie Lithium-, Natrium oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Verbindungen (1) für den sichtbaren Bereich angegebenen Absorptionsmaxima (λₘₐₓ) wurden anhand ihrer Alkalimetallsalze in wäßriger Lösung ermittelt. In den Tabellenbeispielen sind die λₘₐₓ-Werte bei der Farbtonangabe in Klammern gesetzt; die Wellenlängenangabe bezieht sich auf nm.

### Beispiel 1

Zu einer Suspension von 319 Teilen 1-Amino-8-naphthol-3,6-disulfonsäure in 1000 Teilen eines Gemisches aus Wasser und Eis werden 190 Teile 2,4,6-Trichlor-1,3,5-triazin (Cyanurchlorid) eingerührt, und die Mischung wird während drei Stunden unter Einhaltung eines pH-Wertes zwischen 1,5 und 2 und einer Temperatur von 10°C weitergerührt. Anschließend gibt man 173 Teile Anilin-3-sulfonsäure hinzu, stellt einen pH-Wert von 5 ein und rührt den Ansatz noch zwei Stunden bei 15°C unter Einhaltung des pH-Wertes von 5 weiter. Anschließend gibt man nochmals 180 Teile Anilin-3-sulfonsäure hinzu, erwärmt den Ansatz auf 75 bis 80°C und führt die Umsetzung bei dieser Temperatur und einem pH-Wert von 2 während etwa drei Stunden zu Ende.

Zu dem auf 5°C abgekühlten und auf einen pH-Wert von 3 eingestellten Ansatz gibt man sodann die in üblicher Weise hergestellte salzsaure Diazoniumsalzsuspension aus 281 Teilen 4-(β-Sulfatoethylsulfonyl)-anilin und führt die Kupplungsreaktion bei einem pH-Wert von 3 und einer Temperatur von etwa 15°C durch.

Die erhaltene erfindungsgemäße Azoverbindung, die, in Form der freien Säure geschrieben, der Formel 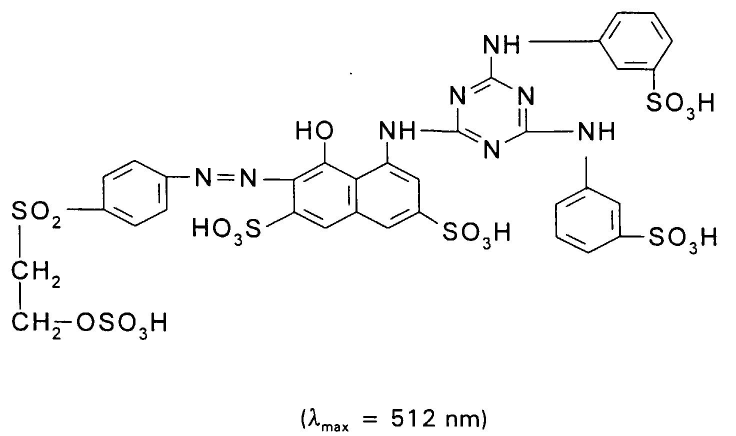 entspricht, wird aus der auf einen pH-Wert von 5,5 eingestellten Syntheselösung in üblicher Weise isoliert, wie beispielsweise durch Aussalzen mit mit Natriumchlorid oder durch Eindampfen der Syntheselösung. Die erfindungsgemäße Azoverbindung besitzt sehr gute faserreaktive Farbstoffeigenschaften und färbt die in der Beschreibung genannten Fasermaterialien, wie insbesondere Cellulosefasern, wie Baumwolle, in klaren blaustichig roten Tönen mit guten Echtheitseigenschaften. Sie ist sehr gut ätzbar und liefert im Ätzdruck klare weiße Konturen.

### Beispiel 2

Zur Herstellung der im Beispiel 1 beschriebenen erfindungsgemäßen Azoverbindung verfährt man in der Weise, daß man zunächst, wie im Beispiel 1 angegeben, 1-Amino-8-naphthol-3,6-disulfonsäure mit Trichlortriazin umsetzt und die erhaltene Dichlortriazinylamino-naphthol-Verbindung mit dem Diazoniumsalz des 4-(β-Sulfatoethylsulfonyl)-anilins in der im Beispiel 1 angegebenen Weise kuppelt. In den so erhaltenen Ansatz mit der Azoverbindung werden 173 Teile Anilin-3-sulfonsäure eingerührt, und die Reaktion wird bei einem pH-Wert zwischen 5 und 5,5 und einer Temperatur von 25°C durchgeführt. Nach einer Reaktionszeit von etwa zwei Stunden gibt man weitere 185 Teile Anilin-3-sulfonsäure hinzu und führt die Umsetzung bei einem pH-Wert von 3 und einer Temperatur von 75°C durch.

Nach Abkühlen und Einstellen des Ansatzes auf einen pH-Wert von 5,5 wird die erfindungsgemäße Azoverbindung isoliert. Sie besitzt die gleichen guten Farbstoffeigenschaften wie die im Beispiel 1 hergestellte Azoverbindung.

### Beispiele 3 bis 26

In den nachfolgenden Tabellenbeispielen werden weitere erfindungsgemäße Azoverbindungen entsprechend der allgemeinen Formel (A) 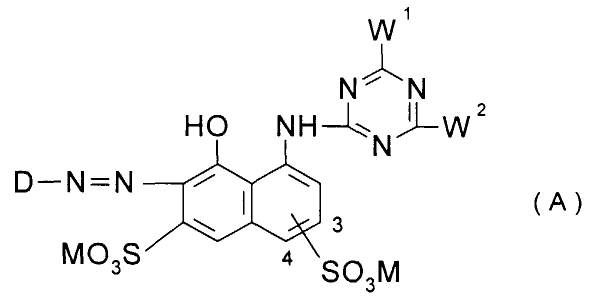 anhand ihrer Komponenten (dem Rest D als Diazokomponente entsprechend der allgemeinen Formel (3), dem Rest W¹ entsprechend dem Rest der Aminoverbindung der allgemeinen Formel (6a) und dem Rest W² entsprechend dem Rest der Aminoverbindung der allgemeinen Formel (6b)) beschrieben. Sie lassen sich in einer der erfindungsgemäßen Verfahrensweisen, beispielsweise analog einem der obigen Ausführungsbeispiele, mit Hilfe der aus der allgemeinen Formel (A) ersichtlichen Komponenten (wie der Diazokomponente D-NH₂, dem 3,6- oder 4,6-Disulfo-1-amino-8-naphthol, einem Halogentriazin, bevorzugt Cyanurchlorid, und den Aminoverbindungen der Formeln H₂N-W¹ und H₂N-W²) herstellen. Sie besitzen sehr gute faserreaktive Farbstoffeigenschaften und färben die in der Beschreibung genannten Fasermaterilaien, wie insbesondere Cellulosefasermaterialien, in dem in dem jeweiligen Tabellenbeispiel angegebenen Farbton (hier für Baumwolle) in hoher Farbstärke und guten Echtheiten.

| Bsp. | Rest D | -SO₃M in ... | Rest W¹ | Rest W² | Farbton |
|---|---|---|---|---|---|
| 3 | 4-(Vinylsulfonyl)-phenyl | 3-Stellung | 4-Sulfo-phenylamino | 3-Sulfo-phenylamino | blaustichig rot (514) |
| 4 | dito | 3-Stellung | dito | 4-Sulfo-phenylamino | blaustichig rot (513) |
| 5 | 4-(β-Sulfatoethylsulfonyl)-phenyl | 3-Stellung | dito | dito | blaustichig rot (513) |
| 6 | dito | 3-Stellung | dito | 3-Sulfophenylamino | blaustichig rot (514) |
| 7 | dito | 3-Stellung | 2-Sulfo-phenylamino | dito | blaustichig rot (512) |
| 8 | 4-(Vinylsulfonyl)-phenyl | 3-Stellung | 3-Sulfo-phenylamino | 3-Sulfo-phenylamino | blaustichig rot (513) |
| 9 | 4-(β-Sulfatoethylsulfonyl)-phenyl | 3-Stellung | 2-Sulfo-phenylamino | 2-Sulfo-phenylamino | blaustichig rot (511) |
| 10 | dito | 3-Stellung | dito | 2-Sulfo-4-methyl-phenylamino | blaustichig rot (512) |
| 11 | 4-(Vinylsulfonyl)-phenyl | 3-Stellung | dito | 4-Sulfo-phenylamino | blaustichig rot (512) |
| 12 | dito | 4-Stellung | 3-Sulfo-phenylamino | dito | blaustichig rot (509) |
| 13 | dito | 4-Stellung | dito | 3-Sulfo-phenylamino | blaustichig rot (510) |
| 14 | 4-(β-Sulfatoethylsulfonyl)-phenyl | 4-Stellung | dito | dito | blaustichig rot (508) |
| 15 | dito | 4-Stellung | dito | N-Methyl-4-sulfo-phenylamino | blaustichig rot (511) |
| 16 | 3-(β-Sulfatoethylsulfonyl)-phenyl | 4-Stellung | dito | dito | blaustichig rot (507) |
| 17 | dito | 3-Stellung | dito | dito | blaustichig rot (510) |
| 18 | dito | 3-Stellung | 3-Sulfo-phenylamino | 4-Sulfo-phenylamino | blaustichig rot (506) |
| 19 | dito | 3-Stellung | dito | 3-Sulfo-phenylamino | blaustichig rot (507) |
| 20 | 3-(Vinylsulfonyl)-phenyl | 3-Stellung | dito | dito | blaustichig rot (510) |
| 21 | 2-Methoxy-5-(β-sulfatoethylsulfonyl)-phenyl | 3-Stellung | dito | dito | bordo (531) |
| 22 | dito | 3-Stellung | dito | 4-Sulfo-phenylamino | bordo (532) |
| 23 | dito | 3-Stellung | dito | 2-Sulfo-phenylamino | bordo (530) |
| 24 | 2-Methoxy-5-(vinylsulfonyl)-phenyl | 3-Stellung | dito | 3-Sulfo-phenylamino | bordo (525) |
| 25 | dito | 3-Stellung | dito | 4-Sulfo-phenylamino | bordo (527) |
| 26 | dito | 3-Stellung | 4-Sulfo-phenylamino | dito | bordo (531) |

## Patentansprüche

1. Azoverbindung entsprechend der allgemeinen Formel (1) 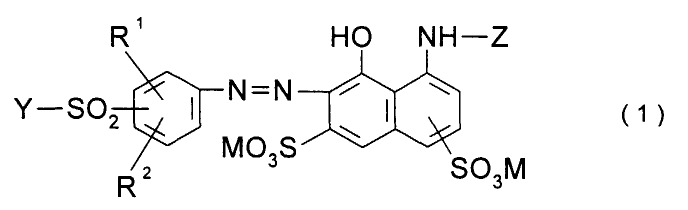 in welcher bedeuten:
R¹ ist Wasserstoff, Halogen, Sulfo, Carboxy, Alkyl von 1 bis 4 C-Atomen oder Alkoxy von 1 bis 4 C-Atomen;
R² ist Wasserstoff, Halogen, Alkyl von 1 bis 4 C-Atomen oder Alkoxy von 1 bis 4 C-Atomen;
Y ist Vinyl, β-Sulfatoethyl, β-Phosphatoethyl, β-Thiosulfatoethyl, β-Acetoxyethyl, β-Chlorethyl, β-Bromethyl oder β-Fluorethyl;
M ist Wasserstoff oder ein Alkalimetall oder ein anderes in Farbstoffen übliches salzbildendes Metall;
die eine Gruppe -SO₃M steht an den Naphthalinrest in para- oder meta-Stellung zur Gruppe -NH-Z gebunden;
Z ist eine Gruppe der allgemeinen Formel (2) 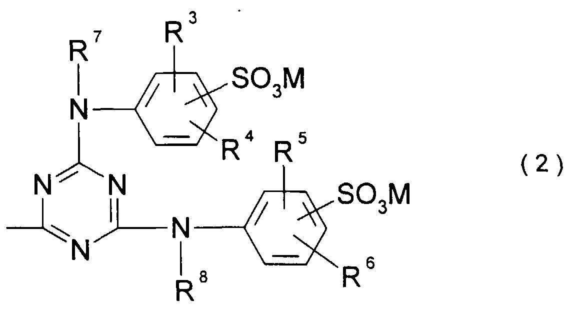 worin bedeuten:
M hat die obengenannte Bedeutung;
R³ ist Wasserstoff, Carboxy, Sulfo, Halogen, Alkyl von 1 bis 4 C-Atomen oder Alkoxy von 1 bis 4 C-Atomen;
R⁴ ist Wasserstoff, Sulfo, Alkyl von 1 bis 4 C-Atomen oder Alkoxy von 1 bis 4 C-Atomen;
R⁵ ist Wasserstoff, Carboxy, Sulfo, Alkyl von 1 bis 4 C-Atomen oder Alkoxy von 1 bis 4 C-Atomen;
R⁶ ist Wasserstoff, Sulfo, Alkyl von 1 bis 4 C-Atomen oder Alkoxy von 1 bis 4 C-Atomen;
R⁷ Wasserstoff oder Alkyl von 1 bis 4 C-Atomen;
R⁸ Wasserstoff oder Alkyl von 1 bis 4 C-Atomen.

2. Azoverbindung nach Anspruch 1, dadurch gekennzeichnet, daß R¹ Wasserstoff, Sulfo, Methyl oder Methoxy ist.

3. Azoverbindung nach Anspruch 1, dadurch gekennzeichnet, daß R¹ Wasserstoff ist.

4. Azoverbindung nach mindestens einem der Ansprüche 1 bis 3, dadurch gekennzeichnet, daß R² Wasserstoff, Methyl oder Methoxy ist.

5. Azoverbindung nach mindestens einem der Ansprüche 1 bis 3, dadurch gekennzeichnet, daß R² Wasserstoff ist.

6. Azoverbindung nach mindestens einem der Ansprüche 1 bis 5, dadurch gekennzeichnet, daß R³ Wasserstoff, Chlor, Methyl, Methoxy, Carboxy oder Sulfo ist.

7. Azoverbindung nach mindestens einem der Ansprüche 1 bis 5, dadurch gekennzeichnet, daß R³ Wasserstoff oder Sulfo ist.

8. Azoverbindung nach mindestens einem der Ansprüche 1 bis 7, dadurch gekennzeichnet, daß R⁴ Wasserstoff oder Sulfo ist.

9. Azoverbindung nach mindestens einem der Ansprüche 1 bis 8, dadurch gekennzeichnet, daß R⁵ Wasserstoff, Methyl, Methoxy, Carboxy oder Sulfo ist.

10. Azoverbindung nach mindestens einem der Ansprüche 1 bis 8, dadurch gekennzeichnet, daß R⁵ Wasserstoff oder Sulfo ist.

11. Azoverbindung nach mindestens einem der Ansprüche 1 bis 10, dadurch gekennzeichnet, daß R⁶ Wasserstoff oder Sulfo ist.

12. Azoverbindung nach mindestens einem der Ansprüche 1 bis 11 dadurch gekennzeichnet, daß R⁷ Wasserstoff ist.

13. Azoverbindung nach mindestens einem der Ansprüche 1 bis 12, dadurch gekennzeichnet, daß R⁸ Wasserstoff ist.

14. Azoverbindung nach mindestens einem der Ansprüche 1 bis 13, dadurch gekennzeichnet, daß Y Vinyl, β-Sulfatoethyl oder β-Thiosulfatoethyl ist.

15. Azoverbindung nach mindestens einem der Ansprüche 1 bis 14, dadurch gekennzeichnet, daß die Gruppe -SO₃M an den Naphthalinrest in meta-Stellung zur Gruppe -NH-Z gebunden ist.

16. Verfahren zur Herstellung einer Azoverbindung von Anspruch 1, dadurch gekennzeichnet, daß man eine Azoverbindung der allgemeinen Formel (5) 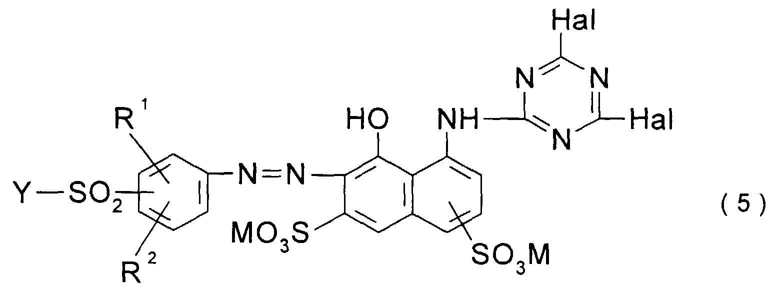 in welcher R¹, R², Y und M die in Anspruch 1 genannten Bedeutungen haben und Hal für Chlor, Brom oder Fluor steht, mit einer Aminoverbindung der allgemeinen Formel (6a) und einer Aminoverbindung der allgemeinen Formel (6b) 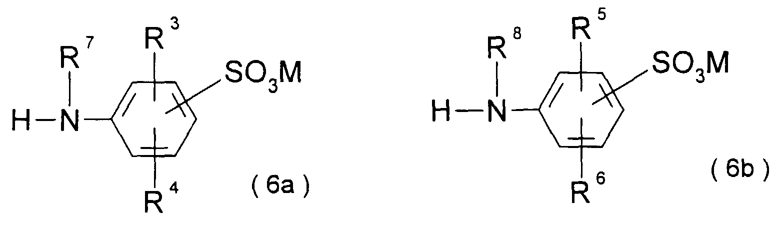 in welchen R³, R⁴, R⁵, R⁶, R⁷, R⁸ und M die in Anspruch 1 genannten Bedeutungen haben, umsetzt, oder daß man eine Verbindung der allgemeinen Formel (7) 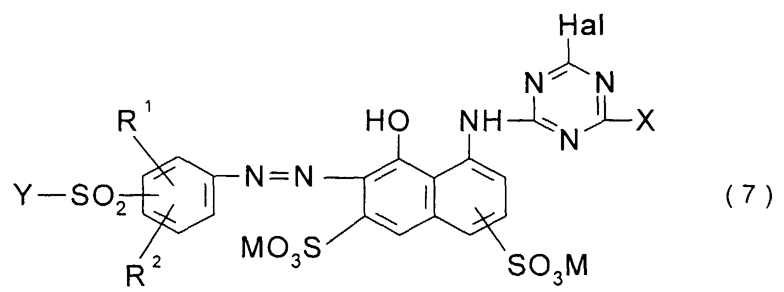 in welcher R¹, R², Y, Hal und M die obengenannten Bedeutungen haben und X ein Rest der allgemeinen Formel (4a) oder (4b) 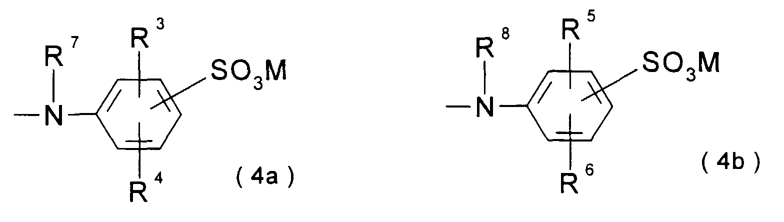 mit R³, R⁴, R⁵, R⁶, R⁷, R⁸ und M der oben genannten Bedeutung ist, mit einer Aminoverbindung der obengenannten und definierten allgemeinen Formel (6b) bzw. (6a) umsetzt, oder daß man eine Verbindung der allgemeinen Formel (8) 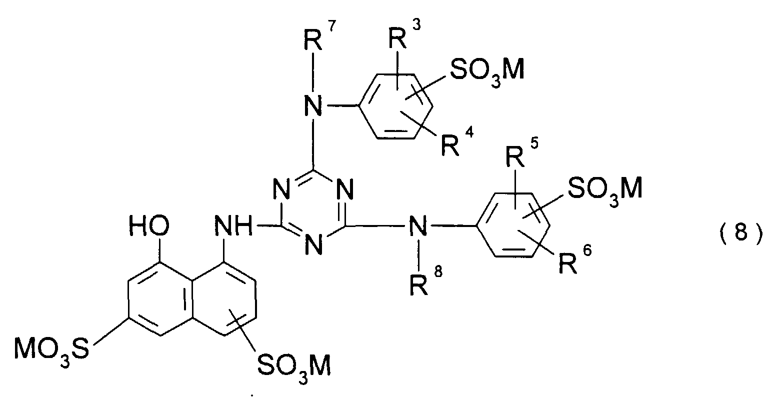 in welcher R³, R⁴, R⁵, R⁶, R⁷, R⁸ und M die obengenannten Bedeutungen haben, mit einem Diazoniumsalz einer Anilinverbindung der allgemeinen Formel (9) 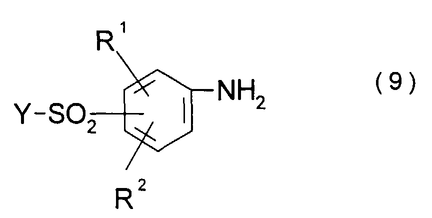 in welcher R¹, R² und Y die obengenannten Bedeutungen haben, kuppelt.

17. Verwendung eines Farbstoffes von Anspruch 1 oder eines nach Anspruch 16 hergestellten Farbstoffes zum Färben von hydroxy- und/oder carbonamidgruppenhaltigem Material, insbesondere Fasermaterial.

18. Verfahren zum Färben von hydroxy- und/oder carbonamidgruppenhaltigem Material, insbesondere Fasermaterial, bei welchem man einen Farbstoff auf das Material aufbringt und den Farbstoff auf dem Material mittels Wärme oder mit Hilfe eines alkalisch wirkenden Mittels oder mittels beider Maßnahmen fixiert, dadurch gekennzeichnet, daß man als Farbstoff einen Farbstoff von Anspruch 1 oder einen nach Anspruch 16 hergestellten Farbstoff einsetzt.
